# EUROPÄISCHE PATENTANMELDUNG

(11) **EP 1 152 034 A1**
(43) Veröffentlichungstag der Anmeldung: **07.11.2001**
(21) Anmeldenummer: 01110549.1
(22) Anmeldetag: 28.04.2001
(51) Int. Cl.: C08L 51/06, C09J 151/06, C09D 151/06, C08L 23/00, C08L 67/00, C08L 77/00, C08G 59/06, C08L 51/04, C08F 255/00

(54) **Thermoplastische Elastomerzusammensetzung und deren Verwendung**

(30) Priorität: 03.05.2000 DE 10021478
(71) Anmelder: REHAU AG + Co, 95111 Rehau (DE)
(72) Erfinder: Rhönisch, Thomas, 95111 Rehau (DE); Steffl, Udo, 95111 Rehau (DE); Mülhaupt, Rolf, 79117 Freiburg (DE); Barghoorn, Peter, 67169 Hallstadt (DE)

(57) **Zusammenfassung**

Die Erfindung betrifft thermoplastisch verarbeitbare Elastomermischungen, in denen die Elastomerkomponente durch Reaktion von modifizierten Fetten und Ölen erzeugt und gleichzeitig vernetzt wird, bevorzugt durch dynamische Vulkanisation.

Die thermoplastisch verarbeitbare Elastomerzusammensetzung ist dadurch gekennzeichnet, dass sie mindestens aus vier Komponenten zusammengesetzt ist.

## Beschreibung

Die vorliegende Erfindung betrifft thermoplastisch verarbeitbare Elastomermischungen in denen die Elastomerkomponente durch Reaktion von modifizierten Fetten und Ölen erzeugt und gleichzeitig vernetzt wird, bevorzugt durch dynamische Vulkanisation.

Thermoplastische Elastomere sind dem Fachmann bereits seit mehreren Jahren bekannt.
In den letzten Jahren gewinnen Sie jedoch immer mehr an Bedeutung. Dieses Wachstum ist auf die attraktive Kombination von Thermoplast-Verarbeitung mit dem Erzielen von kautschukartigen Materialeigenschaften zurückzuführen.

Entsprechend ihrem chemischen Aufbau können Thermoplastische Elastomere unterteilt werden in Blockcopolymere (Styroltypen (TPE-S), Polyetherester (TPE-E), Polyurethane (TPE-U) und Polyetheramide (TPE-A)) und Elastomerblends, bestehend aus thermoplastischen unvernetzten Polyolefinen (TPE-O) und (teil)vernetzten Polyolefinen (TPE.-V)). Werden beim Blenden Vernetzungsmittel zugesetzt, erhält man ein TPE-V. Die Vernetzung des Kautschuks führt dabei zu einer Reihe von Eigenschaftsverbesserungen, wie verbesserter Druckverformungsrest und Wärmeformbeständigkeit und erhöhten Reißfestigkeits- und Elastizitätswerten.

Wie beispielweise von Marc T. Payne und Charles P. Rader "Thermoplastic Elastomers: a rising star" im Elastomer Technology Handbook Boca Raton F1, Editor: N. P. Cheremisinoff, CRC Press, 1993, S. 557 ff beschrieben, sind die elastischen Eigenschaften des resultierenden TPE um so ausgeprägter, je feiner die Verteilung und je höher der Vernetzungsgrad der Elastomerteilchen ist. Daneben werden die physikalisch-mechanischen Eigenschaften wie auch die chemische Beständigkeit und Verhalten gegenüber Kontaktmedien im wesentlichen durch die Einzeleigenschaften der Komponenten inklusive Verträglichkeit von Matrix und dispergiertem Kautschuk, der Phasenmorphologie und der Art des Vernetzungsmittels bestimmt. Beim Stand der Technik handelt es sich in der Regel um hochmolekulare Elastomere, die während der Verarbeitung vernetzt werden.

Die in-situ-Bildung von Elastomerkomponenten durch Reaktion aus Fett- und Ölderivaten wurde bisher nicht beschrieben. Ein Zusatz von niedermolekularen Komponenten kann neben der Weichmacherwirkung zu Ausschwitzungserscheinungen führen.

Die Gruppe der thermoplastischen Elastomere auf Basis von Polyolefinblends ist am weitesten verbreitet. Für die Kautschukphase werden in der Regel hochmolekulare EP(D)M-Co- und Terpolymere eingesetzt und dynamisch durch Schmelzecompoundierung in einer Polyethylen- und/oder Polypropylenmarix mittels Phenolharz- [US 4104210], Schwefel-, Peroxid- [US 4267080; US 3806558; US 4732940; US 4785045], Platin-katalysierter Hydrosilylierungsreaktion [EP 0855 426 A1; US 5597867, US 5672660] oder Silankondensationsreaktion [DE-OS 1413063 A1; DE - 4402943] vernetzt.
Bei diesen Elastomerkomponenten wurde die erfindungsgemäße in-situ Herstellung der Elastomerkomponente sowie der Einsatz von chemisch modifizierten Ölen und Fetten zur Bildung der Elastomerkomponente nicht erwähnt.

In der US 5523350 wurden thermoplastische Elastomere aus einer Polyester-Matrix und einer diskontinuierlichen Acrylkautschukkomponente beschrieben, die durch epoxydierte Öle vernetzt wurde. Im Unterschied zur vorliegenden Erfindung wird ein hochmolekulares Elastomer durch epoxydierte Öle vernetzt.

Bekannt und als Verarbeitungswirkstoff in Polymeren, insbesondere Elastomeren in der DE 3307421 beschrieben sind epoxydierte und anschließend vernetzte Ester aus Alkoholen und ungesättigten Fettsäuren. Eine Verwendung als Kautschukkomponente in Elastomerblends über eine nachträgliche Einarbeitung wurde nicht beschrieben.

In den dem Fachmann bekannten Verfahren können fettchemische Epoxyde mit Maleinsäureanhydrid und/oder Phthalsäureanhydrid zu duromerartigen Polymeren umgesetzt werden. Bekannt ist weiterhin die Verwendung von modifizierten niedrigviskosen pflanzlichen oder tierischen Fetten und Ölen als Ausgangsverbindungen für die Herstellung von Polyesterharzen über RTM- oder VARTM-Verfahren und dergleichen. Die so erhaltenen Reaktionsprodukte sind jedoch nicht mehr thermoplastisch verarbeitbar.

Gegenstand dieser Erfindung ist die Herstellung von thermoplastisch verarbeitbaren Elastomerblends, die dadurch gekennzeichnet sind, dass während der Schmelzecompoundierung die Kautschukkomponente aus modifizierten pflanzlichen oder tierischen Fetten und Ölen erzeugt, vernetzt und homogen in einer kompatibilisierten Polyolefinmatrix dispergiert wird. Besonderes Kennzeichen der vorliegenden Erfindung ist die in-situ Herstellung von Polyesterkautschuken in einer Polypropylen/Poly(ethen-co-vinylacetat)-Matrix durch Reaktion der Di- oder Polyfettsäurekomponenten (C) mit den Oxirangruppen der Ölkomponente (D).

Erfindungsgemäß wir dies dadurch gelöst, dass die Elastomerblends mindestens aus den folgenden vier Komponenten zusammengesetzt sind:

15 bis 70 Gewichtsprozent der Komponente (A), bestehend aus einem oder mehreren unpolaren oder polaren Olefinhomo- oder copolymeren und/oder thermoplastischen Polyestern und/oder Polyamiden, die in der Schmelze bei Temperaturen unterhalb von 400°C verarbeitbar sind; 0,1 bis 30 Gewichtsprozent der Komponente (B), bestehend aus einem oder mehreren unpolaren oder polaren Olefinhomo- oder copolymeren, die durch Pfropfen von Maleinsäureanhydrid, Ithaconsäureanhydrid, (Meth)Acrylsäure und deren Ester entstanden sind, oder aus anhydridfunktionalisierten Copolymeren wie Poly(styrol-co-maleinsäureanhydrid), Poly(ethen-co-maleinsäureanhydrid), Poly(ethen-co-1-olefin-co-maleinsäureanhydrid), wobei 1-Olefin ein Alken oder ein ungesättigter (Meth)Acrylsäureester mit mehr als 4C-Atomen ist, oder aus carbonsäurefunktionalisierten Copolymeren wie Poly(ethen-co-(meth)acrylsäure), Poly(ethen-co-1-olefin-co-(meth)acrylsäure), wobei 1-Olefin ein Alken oder ein ungesättigter (Meth)Acrylsäureester mit mehr als 4C-Atomen ist, einschließlich solchen Copolymeren, in denen die Säuregruppen teilweise mit Metallionen neutralisiert sind, oder aus einem oder mehreren unpolaren oder polaren Olefinhomo- oder copolymeren, die über Oxiranfunktionalitäten verfügen; 0,1 bis 50 Gewichtsprozent der Komponente (C), bestehend aus linearen, cyclischen oder verzweigten Polycarbonsäuren mit mindestens zwei Carbonsäuregruppen, oder Dicarbonsäureanhydriden, abgeleitet von Phthalsäure, Maleinsäure, Fumarsäure, Bernsteinsäure, Octenylbernsteinsäure, Dodecenylbernsteinsäure, Dimerfettsäure,Trimerfettsäure, maleinierten ungesättigten Fettsäuren und Fettsäurestern, Adipinsäure, Sebazinsäure, Ithaconsäure, Methacrylsäure, Acrylsäure, einschließlich Derivaten von olefinisch ungesättigten Fetten und Ölen, und 0,1 bis 50 Gewichtsprozent der Komponente (D), bestehend aus nieder oder hochmolekularen Verbindungen, die über mindestens eine Oxirangruppe verfügen, wobei die Komponenten (C) und (D) miteinander in der Schmelze der Komponente (A) und (B) zur Reaktion gebracht werden und dynamisch vernetzte und/oder verzweigte Polyester in einer thermoplastischen Matrix der Komponenten (A) und (B) bilden.

Die Erfindung beinhaltet Verfahren zur Herstellung der erfindungsgemäßen Gemische und ihre Verwendung für die Herstellung von Formmassen, Filmen, Folien, Schläuchen, Klebstoffen, Extrudaten , Sperrschichten und dergleichen.

Durch die erfindungsgemäße Kombination von dynamischer Herstellung und Vulkanisation der Elastomerkomponente und gleichzeitiger Dispergierung in einer modifizierten Polypropylenmatrix können sehr feine Morphologien erhalten werden, in denen die vernetzten Polyesterteilchen homogen verteilt sind. Zudem können gegenüber einem 2-Stufen-Prozeß mit vorgeschalteter Vernetzung der im Reaktor polymerisierten Kautschukkomponente und nachträglicher Redispergierung in der thermoplastischen Matrix (Statische Vulkanisation) die mechanischen Eigenschaften aufgrund der sehr kleinen Partikelgröße erheblich verbessert werden.
Bei dieser Erfindung wurde gefunden, dass aus niedermolekularen epoxydierten Ölen und Fetten ohne Zusatz höhermolekularer Elastomere thermoplastische Elastomere erzeugt werden können.

Bei Verwendung eines Zweischneckenextruders mit entsprechender Anordnung der Schneckenelemente können mit den erfindungsgemäßen Elastomermischungen auch opak gefärbte Erzeugnisse erhalten werden, die in beliebigen Farbtönen einfärbbar sind.

Durch geeignete Wahl der Komponenten (A) und (B) kann die Verträglichkeit der Thermoplast-Elastomerbestandteile gezielt variiert werden. Bei Verwendung eines kompatibilisierten Polypropylen/Poly(ethen-co-vinylacetat)-Blends als Matrix zeigen die erfindungsgemäßen Elastomerblends sowohl die gute Wärmeformbeständigkeit von Polypropylen, als auch die elastischen Eigenschaften von Poly(ethen-co-vinylacetat). Zusätzlich wird durch die Poly(ethen-co-vinylacetat)-Blendherstellung die Verträglichkeit zur entstehenden Polyesterkautschukkomponente erhöht, welche die Dispergierfähigkeit und damit die physikalisch-mechanischen Eigenschaften verbessert.

Über die Art und Menge der reaktiven Gruppen der Komponenten (C) und (D) kann in den erfindungsgemäßen Zusammensetzungen die Elastomerkomponente während der Schmelzereaktion und das Eigenschaftsprofil gezielt maßgeschneidert werden. Kennzeichen der erfindungsgemäßen Mischungen ist auch die Möglichkeit, durch Blendherstellung mit Polypropylen die Wärmeformbeständigkeit zu erhöhen.

Besonders bevorzugte Komponenten (A) sind ein oder mehrere lineare oder verzweigte Polyethene, Ethen/1-Buten-, Ethen/1-Hexen-, Ethen/1-Octen-, Ethen/Styrol-, Ethen/Vinylacetat-, Ethen/Vinylalkohol-, Ethen/(Meth)Acrylat-, (Meth)Acrylsäure- Copolymere mit statistischen und Blocksequenzen, Ethen/1-Olefin- Ter und Quarterpolymere, und Blends von linearem oder verzweigtem Polyethen mit Elastomeren. Hier kann bevorzugt EP(D)M, isotaktisches, syndiotaktisches und Stereoblock- Polypropylen, elastomeres Polypropylen mit Stereoblock-Mikrostruktur, eingesetzt werden. In weiteren vorteilhaften Ausführungsformen ist die Komponente (A) Polypropylen, Propen/Ethen-, Propen/1-Olefin-Copolymere, Polypropylen/EP(D)M-Blends, Polypropylen/Poly(ethen-co-1-olefin) Blends, Polypropylen/Poly(ethen-co-vinylacetat) Blends, thermoplastische Elastomere wie Ethen/1-Octen-Copolymere mit 1-Octengehalt zwischen 8 und 40 Mol-%. Die zahlenmittleren Molmassen der Olefinhomo- und copolymere variieren zwischen 20000 und 800000 g/mol.

Erfindungsgemäße Komponenten (A) sind auch thermoplastische Polyester wie Poly(ethylenterephthalat), Poly(butylenterephthalat), Poly(ethylenisophthalat), Poly(naphthalenterephthlat), Poly(trimethylenterephthalat), Poly(ethylennaphthalat), Poly(butylennaphthalat), thermoplastische Polyesterelastomere oder auch thermoplastische Homo-Polyamide, Copolyamide, aromatische Polyamide oder Polyamidelastomere. Bevorzugte gewichtsprozentuale Anteile der Komponente (A) in der Mischung von (A), (B), (C), (D) sind 15-70 Gew.-%.

Besonders bevorzugte Komponenten (B) sind Pfropfcopolymere von Olefinhomo- und Copolymere mit Malein- oder Ithaconsäureanhdyrid, die durch Schmelzereaktion in der Gegenwart von Radikalen hergestellt wurden, Carbonsäurefunktionalisierte Copolymere wie Poly(ethen-co-(meth)acrylsäure, inklusive Copolymere in denen die Säuregruppen teilweise oder ganz mit Metallionen, bevorzugt Zink, Natrium und Magnesium, neutralisiert wurden, und Olefinhomo- und Copolymere, die mindestens über eine Oxiranfunktionen verfügen. Ganz besonders bevorzugte Komponente (B) sind maleinsäureanhydrid-funktionalisierte Polypropylene, maleinsäureanhydrid-funktionalisiertes Poly(ethen-co-vinylacetat), maleinsäureanhydrid-funktionalisierte Styrolblockcopolymere, Poly(ethen-co-(meth)acrylsäuren) mit teilweiser Neutralisation von Natrium und/oder Zink und epoxyfunktionalisierte Styrolblockcopolymere. Bevorzugte gewichtsprozentuale Anteile der Komponente (B) in der Mischung von (A), (B), (C), (D) sind 0-30 Gew.-%.

Besonders bevorzugte Komponenten (C) sind lineare, cyclische oder verzweigte Polycarbonsäuren mit mindestens zwei Carbonsäuregruppen einschließlich Derivaten von olefinisch ungesättigten Fetten und Ölen, die durch Katalyse mittels Tonerde aus ungesättigten Fettsäuren oligomerisiert wurden und Gemische isomerer Polycarbonsäuren darstellen, Polycarbonsäureanhydride und/oder maleinierte ungesättigte Fette und Öle pflanzlichen und tierischen Ursprungs. Bevorzugte gewichtsprozentuale Anteile der Komponente (C) in der Mischung von (A), (B), (C), (D) sind 0,1-50 Gew.-%.

Besonders bevorzugte Komponenten (D) sind partiell oder vollständig epoxydierte Derivate von olefinisch ungesättigten pflanzlichen oder tierischen Ölen und Fetten. Ganz besonders bevorzugte Komponenten (D) sind epoxydierte Sojabohnenöle, Palmöle, Leinöle, Vernoniaöle, Sonnenblumenöle, Rapsöle und dergleichen, wie sie zum Beispiel als Weichmacher für Poly(vinylchlorid) eingesetzt werden. Epxoydiertes Sojabohnenöl kann nach dem bekannten Verfahren durch Epoxydierung ungesättigter Fettsäuren mittels Ameisensäureperoxid hergestellt werden. Bevorzugte gewichtsprozentuale Anteile der Komponente (D) in der Mischung von (A), (B), (C), (D) sind 0,1-50 Gew.-%.

Die Reaktion der Komponenten (C) und (D) erfolgt in der Schmelze der Komponenten (A) und (B) bei Temperaturen unter 400°C, wobei bevorzugt das Molverhältnis zwischen Oxiran zu Carbonsäure bzw. Dicarbonsäureanhydrid zwischen 0,1 und 10, besonders bevorzugt zwischen 0,1 und 5 variieren kann.

Den erfindungsgemäßen Gemischen können eine Reihe weiterer Verbindungen zugesetzt werden, zum Beispiel Antioxidantien wie sterisch gehinderte Phenole, sterisch gehinderte Amine, Lactone, Lichtschutzmittel, Weichmacher, Füllstoffe wie zum Beispiel Magnesiumhydroxid, Calciumcarbonat, Talkum, Kieselsäuren, durch Kationen-oder Anionenaustausch modifizierte Silikate mit ionischen Schichtladungen, bevorzugt aufgeschlämmt in den Öl- und Fettkomponenten; Silikate; Haftvermittler wie zum Beispiel Silane, Titanate; Keimbildner, Treibmittel, Flammschutzmittel, optische Aufheller, Pigmente, Metallsalze, Komplexbildner, Lang- und Kurzfasern, Gleitmittel, Ruße und dergleichen.
Im Verfahren zur Herstellung derartiger Verbindungen werden Reaktionsbeschleuniger zugesetzt, welche bevorzugt aus Imidazolen, Organophosphorverbindungen oder Metallkomplexen bestehen.

Die erfindungsgemäßen Gemische finden bevorzugt Verwendung für die Herstellung von Formmassen, Filmen, Folien, Schläuchen, Klebstoffen, Extrudaten, Sperrschichten und dergleichen.

**Tabelle 1:**

| **Beispiele 1 - 3** | | |
|---|---|---|
| **Beispiel 1:** | **Beispiel 2:** | **Bespiel 3:** |
| 10 T PP | 10 T PP | 10 T PP |
| 35 T EVA | 35 T EVA | 30 T EVA |
| 5 T EVA-g-MAH | 5 T EVA-g-MAH | 5T SBS-Epoxy |
| 25 T ESO 1 | 25 T ESO 1 | 25 T ESO 1 |
| 25 T Dimerfettsäure | 25 T Trimerfettsäure | 25 T Dimerfettsäure/ |
| 1 T Katalysator | 1 T Katalysator | Trimerfettsäure, |
| 0.4 T Stabilisator | 0.4 T Stabilisator | 5 T Kreide |
| | | 1 T Katalysator |
| | | 0.4 T Stabilisator |

**Tabelle 2:**

| **Beispiele 4 und 5** | |
|---|---|
| **Beispiel 4:** | **Beispiel 5:** |
| 10 T PP | 10 T PP |
| 35 T EVA | 35 T EVA |
| 5 T EVA-g-MAH | 5 T EVA-g-MAH |
| 25 T Leinöl | 25 T ESO 2 |
| 25 T Dimerfettsäure | 25 T Dimerfettsäure |
| 1 T Katalysator | 1 T Katalysator |
| 0.4 T Stabilisator | 0.4 T Stabilisator |

### Beispiel 1:

In einem Doppelschneckenextruder mit Dosiereinrichtung für flüssige Medien und Vakuumentgasung werden über die Dosierwaage Polypropylengranulat (Schmelzindex 6.5 g/10 min bei 230°C/2.16 kg), Poly(ethen-co-vinylacetat) (Schmelzindex 7.0 g /10 min bei 230°C/2.16 kg), maleiniertes Poly(ethen-co-vinylacetat) und Stabilisator B225 dosiert. Die Mischung wird aufgeschmolzen und in den Extruder eine Mischung aus epoxydiertem Sojabohnenöl genannt ESO (Viskosität bei 20°C 500-600 mPasec, Dimerfettsäure (Dynamische Viskosität bei 25°C 7500 mPasec und Katalysator über die Membranpumpe dosiert. Das resultierende opake Elastomerblend hat die in der Tabelle angegebenen Eigenschaften.

### Beispiel 2:

In einem Doppelschneckenextruder mit Dosiereinrichtung für flüssige Medien und Vakuumentgasung werden über die Dosierwaage Polypropylengranulat (Schmelzindex 6.5 g/10 min bei 230°C/2.16 kg), Poly(ethen-co-vinylacetat) (Schmelzindex 7.0 g/10 min bei 230°C/2.16 kg) maleiniertes Poly(ethen-co-vinylacetat) und Stabilisator B225 dosiert.

Die Mischung wird aufgeschmolzen und in den Extruder eine Mischung aus epoxydiertem Sojabohnenöl (Viskosität bei 20°C 500 - 600 mPasec) Trimerfettsäure (Dynamische Viskosität bei 25°C 45000 mPasec) und Katalysator über die Membranpumpe dosiert.
Das resultierende Elastomerblend hat die in der Tabelle angegebenen Eigenschaften.

### Beispiel 3:

In einem Doppelschneckenextruder mit Dosiereinrichtung für flüssige Medien und Vakuumentgasung werden über die Dosierwaage Polypropylengranulat (Schmelzindex 6.5 g/10 min bei 230°C/2.16 kg), Poly(ethen-co-vinylacetat) (Schmelzindex 7.0 g/10 min bei 230°C/2.16 kg) epoxydiertes Poly(Styrol-co-butadien-co-styrol) (Schmelzindex 9.0 g/10 min bei 190°C/2.16 kg) Stabilisator B225 und Kreide-Masterbatch dosiert. Die Mischung wird aufgeschmolzen und in den Extruder eine Mischung aus epoxydiertem Sojabohnenöl (Viskosität bei 20°C 500 - 600 mPasec) Dimerfettsäure/-Trimerfettsäuregemisch (Dynamische Viskosität bei 25°C 5800 mPasec) und Katalysator über die Membranpumpe dosiert.
Das resultierende Elastomerblend hat die in der Tabelle angegebenen Eigenschaften.

### Beispiel 4:

In einem Doppelschneckenextruder mit Dosiereinrichtung für flüssige Medien und Vakuumentgasung werden über die Dosierwaage Polypropylengranulat (Schmelzindex 6.5 g/10 min bei 230°C/2.16 kg), Poly(ethen-co-vinylacetat) (Schmelzindex 7.0 g/10 min bei 230°C/2.16 kg), maleiniertes Poly(ethen-co-vinylacetat) und Stabilisator B225 dosiert. Die Mischung wird aufgeschmolzen und in den Extruder eine Mischung aus epoxydiertem Leinöl (Viskosität bei 20°C 500 - 600 mPasec, Dimerfettsäure (Dynamische Viskosität bei 25°C 7500 mPasec) und Katalysator über die Membranpumpe dosiert.
Das resultierende Elastomerblend hat die in der Tabelle angegebenen Eigenschaften.

### Beispiel 5:

In einem Doppelschneckenextruder mit Dosiereinrichtung für flüssige Medien und Vakuumentgasung werden über die Dosierwaage Polypropylengranulat (Schmelzindex 6.5 g/10 min bei 230°C/2.16 kg), Poly(ethen-co-vinylacetat) (Schmelzindex 7.0 g/10 min bei 230°C/2.16 kg) maleiniertes Poly(ethen-co-vinylacetat) und Stabilisator B225 dosiert. Die Mischung wird aufgeschmolzen und in den Extruder eine Mischung aus epoxydiertem Sojabohnenöl (Viskosität bei 20°C 550 - 600 mPasec), Dimerfettsäure (Dynamische Viskosität bei 25°C 7500 mPasec) und Katalysator über die Membranpumpe dosiert.

Das resultierende Elastomerblend hat die in der Tabelle angegebenen Eigenschaften.

**Tabelle 3:**

| **Mechanische Eigenschaften der Elastomerblends** | | | | | |
|---|---|---|---|---|---|
| **Eigenschaft** | **Beispiel 1** | **Beispiel 2** | **Beispiel 3** | **Beispiel 4** | **Beispiel 5** |
| Reißfestigkeit ISO 527[N/mm²] | 8.5 | 10.9 | 7.6 | 6.9 | 7.5 |
| Reißdehnung ISO 527 [%] | 461.6 | 519.7 | 305.4 | 354.8 | 289.5 |
| Weiterreißfestigkeit DIN 53507 [N/mm²] | 15.8 | 25.6 | 8.9 | 9.0 | 8.5 |
| Druckverformungsrest 72 h bei RT DIN 53517 [%] | 36.8 | 37.9 | 36.5 | 36.9 | 37.2 |
| Shore A DIN 53505 | 76 | 83 | 76 | 75 | 69 |

## Patentansprüche

1. Thermoplastisch verarbeitbare Elastomerzusammensetzung, **dadurch gekennzeichnet, dass** sie mindestens aus den folgenden vier Komponenten zusammengesetzt ist:
15 bis 70 Gewichtsprozent der Komponente (A), bestehend aus einem oder mehreren unpolaren oder polaren Olefinhomo- oder copolymeren, und/oder thermoplastischen Polyestern, und/oder thermoplastischen Polyamiden, die in der Schmelze bei Temperaturen unterhalb von 400°C verarbeitbar sind;
0,1 bis 30 Gewichtsprozent der Komponente (B), bestehend aus einem oder mehreren unpolaren oder polaren Olefinhomo- oder copolymeren, die durch Pfropfen von Maleinsäureanhydrid, Ithaconsäureanhydrid, (Meth)Acrylsäure und deren Ester entstanden ist, oder aus anhydridfunktionalisierten Copolymeren wie Poly(styrol-co-maleinsäureanhydrid), Poly(ethen-co-maleinsäureanhydrid), Poly(ethen-co-1-olefin-co-maleinsäureanhydrid), wobei 1-Olefin ein Alken oder ein ungesättigter (Meth)Acrylsäureester mit mehr als 4C-Atomen ist, oder aus carbonsäurefunktionalisierten Copolymeren wie Poly(ethen-co-(meth)acrylsäure), Poly(ethen-co-1-olefin-co-(meth)acrylsäure), wobei 1-Olefin ein Alken oder ein ungesättigter (Meth)Acrylsäureester mit mehr als 4-Atomen ist, einschließlich solchen Copolymeren, in denen die Säuregruppen teilweise mit Metallionen neutralisiert sind, oder aus einem oder mehreren unpolaren oder polaren Olefinhomo- oder copolymeren, die über Oxiranfunktionalitäten verfügen
0,1 bis 50 Gewichtsprozent der Komponente (C), bestehend aus linearen, cyclischen oder verzweigten Polycarbonsäuren mit mindestens zwei Carbonsäuregruppen; oder Dicarbonsäureanhydriden, abgeleitet von Phthalsäure, Maleinsäure, Fumarsäure, Bernsteinsäure, Octenylbernsteinsäure, Dodecenylbernsteinsäure, Dimerfettsäure, Trimerfettsäure, maleinierten ungesättigten Fettsäuren und Fettsäurestern, Adipinsäure, Sebazinsäure, Ithaconsäure, Methacrylsäure, Acrylsäure, einschließlich Derivaten von olefinisch ungesättigten Fetten und Ölen, und
0,1 bis 50 Gewichtsprozent der Komponente (D), bestehend aus nieder oder hochmolekularen Verbindungen, die über mindestens eine Oxirangruppe verfügen, wobei die Komponenten (C) und (D) miteinander in der Schmelze der Komponente (A) und (B) zur Reaktion gebracht werden und dynamisch vernetzte oder verzweigte Polyester in einer thermoplastischen Matrix der Komponenten (A) und (B) bilden.

2. Gemische nach Anspruch 1, **dadurch gekennzeichnet, dass** Komponente (A) thermoplastisch verarbeitbar und ein oder mehrere lineare oder verzweigte Polyethene, Ethen/1-Buten-, Ethen/1-Hexen-, Ethen/1-Octen-, Ethen/Styrol-, Ethen/Vinylacetat-, Ethen/Vinylalkohol-, Ethen/(Meth)Acrylat-, (Meth)Acrylsäure- Copolymere mit statistischen und Blocksequenzen, Ethen/1-Olefin- Ter und Quarterpolymere.

3. Gemische nach Anspruch 1, **dadurch gekennzeichnet, dass** Komponente (A) Polypropylen, Propen/Ethen-, Propen/1-Olefin-Copolymere, Polypropylen/EP(D)M-Blend, Polypropylen/Poly(ethen-co-1-olefin) Blend, Polypropylen/Poly(ethen-co-vinylacetat) Blend ist.

4. Gemische nach Anspruch 1,**dadurch gekennzeichnet,dass** Komponente (A) ein thermoplastisches Polyester wie Poly(ethylenterephthalat), Poly(butylenterephthalat), Poly(ethylenisophthalat), Poly(naphthalenterephthlat), Poly(trimethylenterephthalat), Poly(ethylennaphthalat), Poly(butylennaphthalat), thermoplastisches Polyesterelastomeres oder auch ein thermoplastisches Homo-Polyamid, Copolyamid, aromatisches Polyamid oder Polyamidelastomeres ist.

5. Gemische nach Anspruch 1, **dadurch gekennzeichnet, dass** Komponente (B) ein maleinsäureanhydridgepfropftes Homo- oder Copolymeres von 1-Olefinen, ein epoxyfunktionalisiertes Styrolcopolymeres oder ein lonomeres ist.

6. Gemische nach Anspruch 1, **dadurch gekennzeichnet, dass** Komponente (C) eine lineare, cyclische oder verzweigte Polycarbonsäure mit mindestens zwei Carbonsäuregruppen, einschließlich Derivaten von olefinisch ungesättigten Fetten und Ölen, ein Polycarbonsäureanhydrid und/oder maleinierte ungesättigte Fette und Öle pflanzlichen und tierischen Ursprungs ist.

7. Gemische nach Anspruch 1, **dadurch gekennzeichnet, dass** Komponente (D) ein durch partielle oder vollständige Epoxydierung gebildetes Derivat von olefinisch ungesättigten pflanzlichen oder tierischen Ölen und Fetten ist.

8. Verfahren zur Herstellung von Gemischen nach Ansprüchen 1 bis 7, **dadurch gekennzeichnet, dass** zu einem Gemisch aus (A) und (B) die Komponenten (C) und (D) gegeben werden, wobei das Molverhältnis von Oxiran zu Carbonsäure bzw. Carbonsäureanhydrid zwischen 0,1 und 10 variieren kann.

9. Verfahren zur Herstellung von Gemischen nach Ansprüchen 1 bis 7, **dadurch gekennzeichnet, dass** Reaktionsbeschleuniger, bestehend aus Imidazolen, Organophoshorverbindungen oder Metallkomplexen zugesetzt werden.

10. Verwendung von Gemischen nach Ansprüchen 1 - für die Herstellung von Formmassen, Filmen, Folien, Fasern, Schläuchen, Klebstoffen, Lacken, Exrudaten, Sperrschichten und dergleichen.
